(19) Europäisches Patentamt
European Patent Office
Office européen des brevets

(11) Veröffentlichungsnummer: **0 150 759**
**A2**

# (12) EUROPÄISCHE PATENTANMELDUNG

(21) Anmeldenummer: **85100361.6**

(22) Anmeldetag: **16.01.85**

(51) Int. Cl.[4]: **C 08 L 5/00**, C 12 P 19/06, C 08 J 3/06

(30) Priorität: **27.01.84 DE 3402758**

(43) Veröffentlichungstag der Anmeldung: **07.08.85**
**Patentblatt 85/32**

(84) Benannte Vertragsstaaten: **DE FR GB IT**

(71) Anmelder: **HOECHST AKTIENGESELLSCHAFT,**
**Postfach 80 03 20, D-6230 Frankfurt am Main 80 (DE)**

(72) Erfinder: **Fischer, Edgar. Dr., Assmannshäuser Weg 8, D-6000 Frankfurt am Main 71 (DE)**
Erfinder: **Schlingmann, Merten. Dr., Schneidhainer Strasse 32a, D-6240 Königstein/Taunus (DE)**
Erfinder: **Dürsch, Walter. Dr., In der Braubach 4, D-6240 Königstein/Taunus (DE)**
Erfinder: **von Halasz, Sigmar-Peter. Dr., Die Ritterwiesen 1c, D-6237 Liederbach (DE)**

## (54) Viskose wässrige Salzlösungen.

(57) Addukte aus carboxygruppenhaltigen Polysacchariden und Aminverbindungen mit einem hydrophoben Rest können in wässrigen Lösungen anorganischer Salze gelöst werden, wobei viskose Lösungen entstehen. Zu verdickende wässrige Lösungen, in denen die freigesetzte Aminverbindung nicht stört, können somit unmittelbar durch Eintragen des Addukts verdickt werden, wobei gegebenenfalls zum Addukt oder zur Lösung Salz zugesetzt wird.

EP 0 150 759 A2

HOECHST AKTIENGESELLSCHAFT HOE 84/F 018 Dr.KL/cr

Viskose wäßrige Salzlösungen

Wasserlösliche carboxygruppenhaltige Polysaccharide sind gebräuchliche Verdickungsmittel zur Herstellung viskoser wäßriger Lösungen. Mikrobielle Polysaccharide wie Xanthan haben sehr gute Viskositätseigenschaften, werden aber wegen ihres hohen Preises im wesentlichen bei der Zubereitung von Lebensmitteln, Kosmetika oder Arzneimitteln eingesetzt. An diesem hohen Preis tragen die Kosten des aufwendigen Isolierverfahrens einen erheblichen Anteil, unter anderem auch deshalb, weil große Mengen an organischen Lösemitteln notwendig sind.

Carboxygruppenhaltige Polysaccharide werden aus ihren Rohlösungen, beispielsweise Exopolysaccharide aus den Fermentationsbrühen, durch Fällen mit Aminverbindungen isoliert. Der Begriff "Aminverbindungen" steht hier und im folgenden nicht nur für die freien primären, sekundären und tertiären Amine, sondern auch für Aminsalze, einschließlich der quaternären Ammoniumsalze. Die Aminverbindungen enthalten einen hydrophoben Rest, beispielsweise eine langkettige aliphatische Gruppe oder einen alkylsubstituierten Arylrest.

Die Isolierung eines anionischen Heteropolysaccharids mit Hilfe eines Salzes eines langkettigen primären Amins ist aus der US-Patentschrift 3 928 316 bekannt. Ein ähnliches Verfahren unter Verwendung von quaternären Ammoniumsalzen ist in der US-Patentschrift 3 119 812 beschrieben. In der deutschen Patentanmeldung P 32 30 303.3 wurde vorgeschlagen, mikrobielle Polysaccharide mit einem tertiären Amin zu fällen, das einen langkettigen Alkylrest mit 10 bis 20 Kohlenstoffatomen aufweist, wobei die beiden anderen Reste Methyl oder Ethyl sind. In der deutschen Patentanmeldung P 32 30 301.7 wurde vorgeschlagen, die Addukte mikrobieller Polysaccharide mit primären, sekundären oder tertiären Fettaminen durch Behandeln in einem

Alkohol mit einem in diesem Alkohol löslichen oder thermisch leicht dissoziierenden Salz von Ammoniak oder einem leicht flüchtigen Amin zu spalten.

Die deutsche Patentanmeldung P 34 02 757.2 vom gleichen Anmeldetag betrifft ein Verfahren zur Abtrennung von mikrobiellen Polysacchariden aus ihren wäßrigen Lösungen durch Fällung mit quaternären Ammoniumsalzen, die einen langkettigen aliphatischen Rest besitzen, das dadurch gekennzeichnet ist, daß ein quaternäres Ammoniumsalz der allgemeinen Formel I

$$[R^1-(CO)_m-(O-CHR^2-CHR^3)_n-O-COCHR^4-\overset{+}{N}(R^5)_3]X^- \qquad (I)$$

eingesetzt wird, in der

$R^1$ einen geradkettigen oder verzweigten aliphatischen, araliphatischen oder aliphatisch-substitutierten aromatischen Rest mit 8 bis 22 Kohlenstoffatomen, vorzugsweise einen aliphatischen oder aliphatischsubstituierten aromatischen Rest mit 10 bis 18 Kohlenstoffatomen,

$R^2$, $R^3$ und $R^4$, unabhängig voneinander, Wasserstoff oder Methyl, jeweils vorzugsweise Wasserstoff, insbesondere alle Wasserstoff,

$R^5$ Alkyl mit 1 bis 3 Kohlenstoffatomen, vorzugsweise Methyl,

$X^-$ ein Anion, vorzugsweise ein Halogenid, insbesondere Chlorid,

m 0 oder 1, vorzugsweise 0, und

n eine Zahl von 0 bis 30, vorzugsweise 0 bis 10

bedeuten.

Die Verbindungen der Formel I sind bekannt, beispielsweise aus den deutschen Auslegeschriften 1 045 101 und 1 176 361 und sind erhältlich durch Alkylieren von tertiären Aminen der allgemeinen Formel II

$$N(R^5)_3 \qquad (II)$$

mit Alkylierungsmitteln der Formel III

$$R^1-(CO)_m-(O-CHR^2-CHR^3)_n-O-CO-CHR^4-X \quad (III)$$

wobei die Variablen in diesen beiden Formeln die für Formel I genannte Bedeutung haben. Diese Verbindungen werden im alkalischen Medium an der Estergruppe gespalten und zerfallen in den entsprechenden Alkohol und Betain.

Es stehen somit Addukte von carboxygruppenhaltigen Polysacchariden mit langkettigen primären, sekundären und tertiären Aminen und deren Salzen, einschließlich der quaternären Ammoniumsalze, zur Verfügung. Diese Addukte wurden üblicherweise alkalisch zerlegt und die reinen Polysaccharide isoliert sowie die freigesetzten Amine in den Prozeß zurückgeführt. In der US-Patentschrift 3 928 316 ist beschrieben, daß zu Testzwecken die Addukte primärer Amine in Lösungen anorganischer Salze dispergiert wurden, wobei kolloidale Systeme erhalten wurden, die 1 Gew.-% Xanthan enthielten. Es wird erwähnt, daß manche Aminsalze quellen und dann im pH-Bereich zwischen etwa 7 und 1 Verdickungsmittel sind. In der deutschen Patentanmeldung P 32 30 303.3 wird vorgeschlagen, daß die dort beschriebenen Addukte mit tertiären Aminen als Verdickungsmittel dienen können, da sie in niederen Alkoholen solvatisieren. Weiterhin wurde ausgeführt, daß die feuchten Addukte in wäßrigen Lösungen vieler Salze quellen, wobei in einigen Fällen eine teilweise Lösung erfolgt, was besagt, daß auch hierbei kolloidale Systeme erhalten werden.

Es wurde nun gefunden, daß die Addukte von Carboxygruppen enthaltenden Polysacchariden mit Aminverbindungen mit einem hydrophoben Rest unmittelbar in wäßrige Lösungen überführt werden können, wenn man sie mit wäßrigen Lösungen anorganischer Salze auf Anwendungskonzentrationen bringt. Erfindungsgemäß werden also weder organische Lösemittel noch Alkalien benötigt und es entfällt damit auch der mit der Abtrennung und Aufarbeitung dieser Hilfsstoffe verbundene Aufwand. Die Erfindung betrifft somit ein Verfahren zur Herstellung viskoser wäßriger Lösungen auf Basis von carboxygruppenhaltigen Polysacchariden, das dadurch gekennzeichnet ist, daß man das Polysaccharid aus seinen Rohlösungen durch Fällen mit einer Aminverbindung abtrennt, den Niederschlag isoliert und durch Verdünnen mit einer wäßrigen Lösung eines anorganischen Salzes auf Anwendungskonzentrationen löst. Die Erfindung betrifft weiterhin die so erhaltenen wäßrigen Lösungen, die neben dem anorganischen Salz und der freigesetzten Aminverbindung das gelöste carboxygruppenhaltige Polysaccharid enthalten. Ein anderer Aspekt der Erfindung besteht darin, daß die Addukte carboxygruppenhaltiger Polysaccharide mit Aminverbindungen unmittelbar zur Verdickung salzhaltiger Lösungen eingesetzt werden, in denen das freigesetzte Amin nicht stört. Weitere Aspekte der Erfindung ergeben sich aus den im folgenden dargelegten bevorzugten Ausführungsformen der Erfindung.

Die Isolierung des gefällten Addukts erfolgt in an sich bekannter Weise, wobei es - im Gegensatz zu den bekannten Verfahren - nicht erforderlich ist, die Mutterlauge weitgehend abzutrennen. Die Addukte werden vielmehr besonders vorteilhaft in Form der isolierten Pasten bzw. Preßkuchen weiterverarbeitet. Diese Weiterverarbeitung kann unmittelbar anschließend an die Isolierung erfolgen, vorteilhaft jedoch erst am Ort der Anwendung. Im letzteren Fall wird man abwägen, inwiefern die mit einer weitergehenden Abtrennung der Mutterlauge verbundenen Kosten durch Einsparungen beim Transport aufgewogen oder überkompensiert werden.

Bei einer bevorzugten Ausführungsform der Erfindung kommen als Salzlösungen technische Lösungen von Produkten in Betracht, die in eine viskosere Form überführt werden sollen. Es ist selbstverständlich auch möglich, die Addukte in salzarmem oder salzfreiem Wasser zu dispergieren und dann erst Salze zuzusetzen.

Als Salze eignen sich alle gut wasserlöslichen Salze und Salzgemische, insbesondere technische Salzgemische, wie sie vielfältig in der chemischen Produktion anfallen.

Eine besonders bevorzugte Ausführungsform der Erfindung besteht darin, daß die Addukte in Meerwasser oder technischen Abfall-Salzlösungen gelöst werden.

Als Beispiel für technische salzhaltige Lösungen, die erfindungsgemäß verdickt werden können, kommen Farbstofflösungen und -dispersionen in Betracht, die üblicherweise von der Synthese her Salze enthalten oder die durch Aussalzen isoliert wurden. Ebenso geeignet sind Farbstofflösungen, die durch Lösen von Farbstoffzubereitungen erhalten werden, welche Salze als Stellmittel enthalten. Solche salzhaltigen Farbstofflösungen können erfindungsgemäß zu Klotzflotten oder Druckpastenansätzen verarbeitet werden. Selbstverständlich wird man beim Einsatz hochaktiver Reaktivfarbstoffe keine Addukte von primären oder sekundären Aminen verwenden, bei denen das freigesetzte Amin die Reaktivgruppe blockieren könnte.

Analog zu den vorgenannten Farbstofflösungen kommen auch andere salzhaltige wäßrige Lösungen oder auch Dispersionen in Betracht, bei denen die freigesetzte Aminverbindung nicht stört, wie beispielsweise bei Textilausrüstungsflotten.

Besonders vorteilhaft können wäßrige Lösungen verdickt werden, die langkettige Aminverbindungen enthalten, beispielsweise Tenside auf Basis quaternärer Ammoniumsalze wie technische Reinigungs- oder Desinfektionsmittel. Sofern diese zu verdickenden Lösungen keine für eine ausreichend schnelle Zerlegung der Addukte hinreichende Salzkonzentration aufweisen, wird die entsprechende Menge Salz bzw. Salzlösung zugesetzt.

Ein weiteres vorteilhaftes Anwendungsgebiet der Erfindung ist die Tertiärförderung von Erdöl.

Viele der freigesetzten Aminverbindungen können als oberflächenaktive Mittel die anwendungstechnischen Eigenschaften der zu verdickenden wäßrigen Lösungen verbessern. Sollte die Tendsidwirkung stören, so können die im alkalischen Medium spaltbaren quaternären Ammoniumsalze als Aminverbindungen eingesetzt werden. Selbstverständlich kann auch eine etwa störende Schaumbildung mit üblichen Entschäumern bekämpft werden.

Bei den erfindungsgemäß zu verdickenden Lösungen liegt die Konzentration an carboxygruppenhaltigem Polysaccharid im allgemeinen bei etwa 0,05 bis etwa 0,5, vorzugsweise bei 0,1 bis 0,2 Gew.-%, wobei im Einzelfall die Konzentration natürlich von der Löslichkeit des Polysaccharids, den übrigen Bestandteilen der Lösung und der gewünschten Viskosität abhängt. Der Fachmann kann anhand einfacher Vorversuche leicht die geeignetste Konzentration ermitteln.

Die Art der Salze ist unkritisch; selbstverständlich dürfen die anwendungstechnischen Eigenschaften der zu verdickenden Lösungen nicht beeinträchtigt werden. Die Mindestkonzentration ergibt sich durch ihre Funktion als Lösungsvermittler, die Obergrenze der Konzentration durch ihre Löslichkeit und die Beeinflussung der Löslichkeit der übrigen Bestandteile der Lösung. Die Addukte lösen sich umso leichter in Salzlösungen, je hydrophiler die Aminkomponente und je konzentrierter die Salzlösung ist. Je nach der Art des verwendeten Amins können die Salzkonzentrationen von etwa 0,1 bis 60, bevorzugt 2 bis 20 Gew.-% schwanken. Geeignete Konzentrationen kann auch hier der Fachmann leicht durch einfache Vorversuche ermitteln. Selbstverständlich kann man zunächst auch eine höhere Salzkonzentration einstellen und diese dann mit Wasser oder einer verdünnten Salzlösung auf die Endkonzentration verdünnen bzw. umgekehrt eine zunächst niedrigere Salzkonzentration durch Zusatz von Salz oder konzentrierterer Salzlösung erhöhen.

Um die anwendungstechnischen Eigenschaften der zu verdickenden Lösungen und der gelösten carboxygruppenhaltigen Polysaccharide selbst nicht zu beeinträchtigen, werden Salze gewählt, deren wäßrige Lösungen nicht zu sauer bzw. nicht zu alkalisch reagieren, wie beispielsweise die Chloride, Nitrate und Acetate der Alkali- und Erdalkalimetalle, die Sulfate der Alkalimetalle, sowie des Magnesiums, Aluminiums und Zinks, die primären Phosphate der Alkalimetalle, Ammoniumsalze starker anorganischer und organischer Säuren wie Essigsäure und anderer niedermolekularer Carbonsäuren.

Als carboxygruppenhaltige Polysaccharide dienen bevorzugt mikrobielle exocelluläre Polysaccharide, wie sie beispielsweise in den vorstehend genannten Patentschriften und in der britischen Patentanmeldung 2 053 945 in der Tabelle auf den Seiten 1-3 aufgeführt sind. In Betracht kommen weiterhin carboxygruppenhaltige Cellulose- oder Stärkederivate, beispielsweise Carboxymethyl- und 2-Carboxyethylcellulosen und -stärken, auch in Form von Abwässern, die solche Verbindungen enthalten.

Von technischem Interesse sind die Heteropolysaccharide, die durch Fermentation mit Hilfe von Bakterien der Gattung Xanthomonas gebildet werden. Repräsentative Stämme hierfür sind beispielseise X. begoniae, X. carotae, X. hederae, X. incari, X. malvacearum, X. phaseoli und insbesondere X. campestris. Das insbesondere von dem Stamm Xanthomonas campestris NRRL B-1459 gebildete Heteropolysaccharid aus Glucose-, Mannose-und Glucuronsäure-Einheiten im Polymermolekül, das noch Acetyl- und Brenztraubensäuregruppen trägt, ist unter dem Namen Xanthan bekannt. Die Herstellung dieses Produkts und ähnlicher Harze sind in der britischen Patentanmeldung 2 053 945, der darin zitierten US-PS 3 406 114 sowie in der US-PS 3 928 316 beschrieben.

Bei diesen Fermentationsverfahren wird eine Lösung mit einem Gehalt von etwa 0,5 bis 4 Gew.-% Polysaccharid erhalten. Im Falle von Xanthan wählt man zweckmäßig als Ausgangsmaterial Fermentationsbrühen mit einem Gehalt von etwa 1,8 bis 2,4 Gew.-%.

Die Aminverbindung wird vorzugsweise in Form eines Salzes eingesetzt, d.h. die freien Amine werden in Säureadditionssalze überführt. Diese Salze können jedoch auch erst im Laufe des Ausfällverfahrens erzeugt werden. Feste freie Amine können hierbei auch in Form ihrer Schmelzen oder Lösungen, beispielsweise in niederen Alkoholen, eingesetzt werden.

Die Säureadditionssalze der primären, sekundären oder tertiären Aminverbindungen entsprechen hierbei der allgemeinen Formel IV

$$[R^1-(OCHR^2-CHR^3)_n-\overset{+}{N}(R^6)_2H]X^- \qquad (IV)$$

in der $R^1$, $R^2$, $R^3$, X und n die für Formel I genannten Bedeutungen haben, X jedoch bevorzugt der Rest einer niedermolekularen Monocarbonsäure wie Propionat, Glycolat, Lactat und insbesondere Acetat ist;
die Reste $R^6$, die gleich oder verschieden sein können, stehen für Wasserstoff, Methyl oder Ethyl oder einen Rest der allgemeinen Formel V

$$-(CHR^2-CHR^3-O)_n- \qquad (V)$$

in der $R^2$, $R^3$ und n die vorstehend genannten Bedeutungen haben.

Bevorzugte Amine für das erfindungsgemäße Verfahren, die diesen Aminsalzen (IV) zugrunde liegen, sind Decyldimethylamin, Dodecyldimethylamin Tetradecyldimethylamin, Hexadecyldimethylamin, Octadecyldimethylamin, Undecyldimethylamin, Isotridecyldimethylamin, Oleyldimethylamin, Dodecylamin + 2, 4, 6 oder 8 Mol Ethylenoxid oder Octadecylamin + 2, 4, 6, 8, 10, 15, 20 oder 25 Mol Ethylenoxid.

Besonders bevorzugt sind die leicht zugänglichen Dimethylfettalkylamine, insbesondere die technischen Produkte, deren langer Alkylrest sich von Ölen und Fetten ableitet wie Kokosfett, Sojaöl oder Talgfett. Es ist z.B. unerheblich, wenn in technischen Produkten geringe Anteile an Alkenylverbindungen enthalten sind. Es ist also nicht erforderlich, daß die entsprechenden Rohstoffe bzw. Amine voll durchhydriert sind. Es kommen sogar bevorzugt technische Rohprodute in Betracht, was das erfindungsgemäße Verfahren zusätzlich verbilligt.

Als Aminverbindungen kommen - wie vorstehend ausgeführt - auch quaternäre Ammoniumsalze in Betracht. Außer den Verbindungen der Formel I sind die Salze der allgemeinen Formel VI

$$[R^1-(OCHR^2-CHR^3)_n-\overset{+}{N}(R^5)_3]X^- \qquad \text{(VI)}$$

bevorzugt, in der $R^1$, $R^2$, $R^3$, $R^5$, X und n die für Formel I genannten Bedeutungen haben.

Die Fällung des Polymers mit Hilfe der Amine erfolgt im sauren Medium in einem pH-Bereich von etwa 2 bis 6,8, vorzugsweise 3,5 bis 6,0, insbesondere 4,0 bis 5,5. Zur Einstellung dieses pH-Bereiches werden nach Zugabe der

primären, sekundären oder tertiären Amine vorteilhaft organische Säuren in entsprechenden Mengen nachträglich zugefügt. Bevorzugt sind niedermolekulare Monocarbonsäuren mit bis zu 5 Kohlenstoffatomen, die auch Hydroxygruppen tragen können, wie beispielsweise Ameisensäure, Essigsäure, Propionsäure, Glykolsäure oder Milchsäure, vorzugsweise Essigsäure.

Die aminhaltige Polymersuspension kann aber auch z.B. in ein saures Fällbad eingetragen werden. Unabhängig davon, ob die Säure nach dem Amin zur Fällung in die Fermentationsbrühe gegeben wird oder in Form eines Fällbades vorgelegt wird, ist es vorteilhaft, zunächst das primäre, sekundäre oder tertiäre Amin der Fermenterbrühe zuzumischen, da so die erhaltenen Addukte eine sehr homogene Zusammensetzung aufweisen und gut filtrierbare Fällungen entstehen.

Die Zugabe von organischen Säuren ist bei der Verwendung der quaternären Ammoniumsalze nicht notwendig. Sie stört die Ausfällungen jedoch auch nicht. Zweckmäßigerweise werden wäßrige Lösungen der quaternären Salze zu den Lösungen der carboxygruppenhaltigen Polysaccharide gegeben.

Die zu einer quantitativen Fällung der carboxygruppenhaltigen Polysaccharide erforderliche Menge an Aminverbindungen kann von der stöchiometrischen Menge abweichen und ist in gewissen Grenzen vom Polysaccharid und von der Natur der Aminverbindung abhängig. Die zweckmäßigste Menge kann anhand von einfachen Vorversuchen ermittelt werden. Im allgemeinen genügen zu einer gut filtrierbaren Abscheidung 10 bis 120, bevorzugt 20 bis 50 % Aminverbindung, bezogen auf das Gewicht des trockenen Polysaccharids. Generell wird die Abtrennbarkeit mit steigender Hydrophobie des Restes $R^1$ verbessert. Wenn also die Gruppe $R^1$ in den allgemeinen Formeln I, IV und

VI wenig hydrophob ist, darf eine vorhandene Polyalkoxykette nicht stark hydrophil sein, d.h. n sollte gegen 0 gehen, falls $R^2$ und $R^3$ Wasserstoff sind. Ist $R^1$ stark hydrophob, also beispielsweise ein Alkylrest mit 18 und mehr Kohlenstoffatomen, so kann n einen Wert an der Obergrenze des definierten Bereichs annehmen, auch wenn $R^2$ und $R^3$ für Wasserstoff stehen.

Die Fällung der Polysaccharide erfolgt zweckmäßig unter intensiver mechanischer Beanspruchung mit Hilfe von Apparaturen, die eine Rühr-, Schneid-, Mahl- oder Scherwirkung auf das ausgefällte Produkt ausüben können. Das ausgefällte Addukt wird in üblicher Weise, beispielsweise durch Dekantieren, Filtrieren oder Zentrifugieren, von der Mutterlauge abgetrennt und je nach der gewünschten Weiterverarbeitung gegebenenfalls gewaschen und - sofern erforderlich - weitgehend entwässert, beispielsweise durch Pressen. Man kann so beispielsweise Pasten oder Preßkuchen erhalten, die etwa 4 bis 40, bevorzugt 6 bis 30, Gew.-% Feststoff enthalten.

Die Zusammensetzung der Addukte ist abhängig von den Äquivalentgewichten der verwendeten Polysaccharide und Amine. Das Verhältnis Polysaccharid zu Amin im Feststoff kann beispielsweise bei der Ausfällung von Xanthan zwischen etwa 40:60 und 80:20 schwanken.

Die Polysaccharid-Amin-Addukte können auch in üblicher Weise getrocknet und gegebenenfalls in dieser Form mit Salzen vermischt, beispielsweise durch Mahlung, oder mit Salzlösungen behandelt werden. Wie bereits erwähnt, werden jedoch vorzugsweise die wasserfeuchten Pasten bzw. Preßkuchen, gegebenenfalls nach Salzzusatz, direkt verwendet. Salzhaltige Pasten sind wesentlich viskoser als wasserhaltige. Es kann deshalb auch vorteilhaft sein, zunächst sehr viskose Pasten herzustellen und diese mit Salzlösung oder Wasser bis zur Endkonzentration zu verdünnen. Der Fachmann kann aufgrund seines Fachwissens die zweckmäßigste Form des Einsatzes den Gegebenheiten entsprechend anpassen.

In den folgenden Beispielen werden vorteilhafte Ausführungsformen der Erfindung näher erläutert. Prozentangaben und Relationen beziehen sich hierbei auf das Gewicht, sofern nichts anderes angegeben ist.

Die Viskositäten wurden an Lösungen bestimmt, die jeweils 0,1 % (1000 ppm) an Polysaccharid enthielten. Als Lösemittel diente eine "Standardsalzlösung" mit einem Gehalt von 130 g Natriumchlorid und 10 g Calciumchlorid pro Liter.

Die Viskositätswerte $\eta$ wurde mit einem Rotationsviskometer ®ROTOVISKO RV 100/CV 100 der Fa. Haake, Berlin, bei 22°C und einem Schergefälle von D= 10,0 $s^{-1}$ ermittelt und in mPa·s angegeben. Vergleichswerte zeigt die Tabelle 1.

Tabelle 1

| 0,1 % | $\eta$ |
|---|---|
| Xanthan (® RHODOPOL 23)* | 41,0 |
| Carboxymethylcellulose | 1,45 |
| Carboxymethylstärke | 1,38 |
| - (= reines Lösemittel) | 1,24 |

* der Fa. Rhône-Poulenc

Beispiele 1 bis 11

Allgemeine Verfahrensweise:

Zu jeweils 600 g einer 1,5 %igen Lösung eines handelsüblichen Xanthan-Pulvers (RHODOPOL 23) wurden unter

intensivem Rühren zunächst x g (Spalte 4 der Tabelle 2) verschiedener primärer und tertiärer Amine der allgemeinen Formel VII

$$R^1-N(R^6)_2 \qquad VII$$

(siehe Spalten 2 und 3 der Tabelle 2) gegeben. Flüssige Amine wurden direkt in 100 %iger Form eingesetzt, bei festen Aminen wurden 10 %ige Dispersionen der Schmelzen verwendet. Anschließend wurde jeweils 3 g Eisessig zugegeben und die ausgefallenen Xanthan-Amin-Addukte abgesaugt. Die feuchten Filterrückstände wurden gewogen (y g, Spalte 5) und ihr Gehalt an Xanthan berechnet (Spalte 6). Die Filterrückstände wurden unter intensivem Rühren in Salzlösungen derart gelöst, daß 0,1 %ige Lösungen, bezogen auf Xanthan, resultierten. Die gefundenen Viskositätswerte $\eta$ wurden in Spalte 7 in mPa·s angegeben.

Tabelle 2

| 1 Beisp.-Nr. | 2 $R^1$ | 3 $R^6$ | 4 x g Amin (100 %) | 5 y g Addukt-Paste | 6 % Xanthan in Addukt-Paste | 7 η (mPa·s) |
|---|---|---|---|---|---|---|
| 1 | $C_{10}H_{21}$ | H | 3,4 | 31,8 | 28,3 | 42,1 |
| 2 | $C_{12}H_{25}$ | H | 2,6 | 64,5 | 13,9 | 30,1 |
| 3 | $C_{14}H_{29}$ | H | 3,0 | 21,3 | 28,8 | 34,6 |
| 4 | $C_{16}H_{33}$ | H | 3,6 | 29,6 | 30,4 | 34,4 |
| 5 | $C_{18}H_{37}$ | H | 4,0 | 81,5 | 11,0 | 25,5 |
| 6 | Cocosfett-alkyl | $CH_3$ | 3,5 | 32,7 | 27,5 | 39,3 |
| 7 | Talgfett-alkyl | $CH_3$ | 4,5 | 32,2 | 27,9 | 30,3 |
| 8 | Cocosfett-alkyl | $C_2H_4-OH$ | 4,0 | 41,1 | 21,9 | 24,1 |
| 9 | $C_{18}H_{35}$ | $C_2H_4-OH$ | 4,7 | 33,9 | 26,5 | 23,1 |
| 10 | Talgfett-alkyl | $(C_2H_4O)_{2,5}H$ | 6,4 | 34,3 | 26,2 | 30,0 |
| 11 | $C_{18}H37$ | $(C_2H_4O)_{7,5}H$ | 12,0 | 73,0 | 12,3 | 23,1 |

Beispiele 12 bis 23

Allgemeine Verfahrensweise:

Zu jeweils 600 g einer 1,5 %igen Lösung von handelsüblichem Xanthan-Pulver (RHODOPOL 23) wurden unter intensivem Rühren x g (Spalte 6 der Tabelle 3) von 50 %igen bzw. 25 %igen Lösungen quaternärer Ammoniumchloride der allgemeinen Formel Ia

$$[R^1-(CO)_m-(O-C_2H_4)_n-(O-CO-CH_2)_q-\overset{+}{N}(CH_3)_3]\ Cl^- \qquad Ia$$

zugesetzt. Die Bedeutung von $R_1$, m, n und q ist in den Spalten 2 bis 5 der Tabelle 3 angegeben. Die ausgefallenen Xanthan-Amin-Addukte wurden abgesaugt und die so erhaltenen Pasten gewogen. Ihr Gewicht (y g, Spalte 7) ihr Gehalt an Xanthan (Spalte 8) und die Viskositätswerte der 0,1 %-igen Lösungen in Standardsalzlösung (Spalte 9) sind in Tabelle 3 zusammengestellt.

Tabelle 3

| 1<br>Beisp.<br>Nr. | 2<br>$R^1$ | 3<br>m | 4<br>n | 5<br>q | 6<br>x g z % Lösg.<br>von Ia | 7<br>y g Addukt-<br>Paste | 8<br>% Xanthan<br>in Addukt-<br>Pasten | 9<br>n<br>(mPa•s) |
|---|---|---|---|---|---|---|---|---|
| 12 | Sojaalkyl | 0 | 0 | 0 | 10 g/50 % | 33,5 | 26,9 | 29,3 |
| 13 | $C_{10}H_{21}$ | 0 | 0 | 1 | 20 g/25 % | 60,0 | 15,0 | 36,6 |
| 14 | $C_{12}H_{25}$ | 0 | 0 | 1 | 17 g/25 % | 25,9 | 34,8 | 35,0 |
| 15 | i-$C_{13}H_{27}$ | 0 | 0 | 1 | 22 g/25 % | 32,5 | 27,7 | 30,6 |
| 16 | Talgfett-alkyl | 0 | 0 | 1 | 70 g/10 % | 37,5 | 24,0 | 46,0 |
| 17 | Cocosfett-alkyl | 0 | 3 | 1 | 30 g/25 % | 34,9 | 25,8 | 35,4 |
| 18 | " | 0 | 10 | 1 | 58 g/25 % | 61,3 | 14,7 | 26,9 |
| 19 | Cocosfett-säurealkyl | 1 | 2 | 1 | 52 g/25 % | 46,5 | 19,4 | 31,7 |
| 20 | $C_{18}H_{35}$ | 0 | 6 | 1 | 55 g/25 % | 42,6 | 21,1 | 38,4 |
| 21 | $C_{18}H_{37}$ | 0 | 6 | 1 | 52 g/25 % | 53,0 | 17,0 | 52,9 |
| 22 | 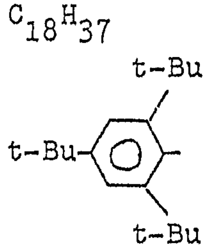 | 0 | 6 | 1 | 40 g/25 % | 38,9 | 23,1 | 40,4 |
| 23 | $C_{9}H_{19}$-$C_6H_4$ | 0 | 8 | 1 | 45 g/25 % | 74,0 | 12,2 | 40,2 |

-16-

Beispiel 24

In einem Fermentationsansatz zur Herstellung von Xanthan wurde die Bakterienkultur vom Typ Xanthomonas campestris durch Erhitzen abgetötet und die Zellwände durch Zugabe von Alkalase aufgelöst. Zu 600 g des derart vorbereiteten Gemischs, das ca. 1,9 % Xanthan enthielt, wurden mit Hilfe eines Schnellrührers (ULTRATURRAX) 35 g einer 25 %igen Lösung des Betain-n-dodecylesterchlorids der Formel

$$[H-(CH_2)_{12}-O-CO-CH_2-\overset{+}{N}(CH_3)_3]\ Cl^-$$

eingerührt und der sich abscheidende Addukt-Niederschlag mit Hilfe einer Nutsche angereichert. Man erhielt 446 g einer schwach gelb gefärbten Paste mit einem Xanthan-Gehalt von 7,6 %.

50 g dieser Paste wurden mit der gleichen Menge Standardsalzlösung zu einer viskosen salzhaltigen Paste vermahlen und diese mit weiterer Standardsalzlösung auf einen Xanthan-Gehalt von 0,1 % verdünnt. Die Viskosität dieser Lösung lag bei $\eta$= 40,0 mPa•s.

Beispiel 25

Man verfuhr wie im Beispiel 24, fällte jedoch das Xanthan mit 24 g Talgfettdimethylamin und 20 g Eisessig aus. Man erhielt 131,7 g einer Adduktpaste mit einem Gehalt an 8,6 % Xanthan. 50 g dieser Paste wurden mit der gleichen Gewichtsmenge Standardsalzlösung vermahlen und die erhaltene viskose salzhaltige Paste mit weiterer Standardsalzlösung auf die Anwendungskonzentration von 0,1 % Xanthan-Gehalt weiter verdünnt. Die Viskosität dieser Lösung lag bei $\eta$= 31,9 mPa•s.

Beispiel 26

Man verfuhr wie im Beispiel 24 und 25, fällte jedoch das Xanthan mit 19 g Cocosfettdimethylamin und 19 g Eisessig aus. Man erhielt als Filterrückstand 169 g einer Addukt-Paste mit einem Xanthan-Gehalt von 6,7 %. 50 g dieser Paste wurden zunächst mit der gleichen Gewichtsmenge Standardsalzlösung vermahlen und die salzhaltige Paste auf einen Xanthan-Gehalt von 0,1 % mit Standardsalzlösung weiter verdünnt. Diese Lösung zeigte eine Viskosität von η= 40,2 mPa•s.

Beispiel 27

Zu 600 g einer 1,5 %igen Lösung von Carboxymethylcellulose (CMC) wurden 21 g einer 50 %igen Hexadecyl-trimethylammoniumchloridlösung gegeben und das ausgefallene Addukt abgesaugt. Man erhielt 55 g einer Paste mit einem CMC-Gehalt von 16,4 %. Die Viskosität einer 0,1 % CMC enthaltenden Lösung dieser Paste in Standardsalzlösung lag bei η= 1,73 mPa•s.

Beispiel 28

Zu 400 g einer 1,5 %igen Lösung von Carboxymethyl-hydroxyethyl-cellulose (CMHEC) wurden 12 g einer 50 %igen Hexadecyl-trimethyl-ammoniumchloridlösung gegeben. Nach Absaugen wurden 42,6 g einer Paste erhalten, die einen CMHEC-Gehalt von 14,1 % hatte. Nach Verdünnen mit Standard-Salzlösung auf 0,1 % CMHEC-Gehalt betrug die Viskosität η= 3,24 mPa•s.

Beispiel 29

Zu 600 g einer 1,5 %igen Lösung von Carboxymethylstärke (CMS) wurden 13 g einer 50 %igen Lösung von Hexadecyl-

trimethyl-ammoniumchlorid zugefügt. Nach Absaugen hinterblieben 23,0 g einer Paste mit 39,1 % CMS-Gehalt. Nach Verdünnung mit Standardsalzlösung auf 0,1 % CMS-Gehalt wurde eine Viskosität $\eta$ von 3,11 mPa·s gefunden.

Beispiel 30

Es wurde wie im Beispiel 29 gearbeitet, jedoch die Fällung mit 10 g Cocosfettdimethylamin und 6 g Eisessig durchgeführt. Nach Absaugen resultierten 24,7 g einer Paste mit einem CMS-Gehalt von 36,4 %. Nach Verdünnen mit Standardsalzlösung auf 0,1 % CMS-Gehalt lag die Viskosität $\eta$ bei 1,52 mPa·s.

Beispiel 31

Zu 600 g einer 1,5 %igen Lösung eines handelsüblichen Xanthan-Pulvers (RHODOPOL 23) wurden unter intensivem Rühren 35 g einer 25 %igen Lösung des Salzgemischs der Formel

$$[H-(CH_2)_a-O-CO-CH_2-\overset{+}{N}(C_2H_5)_3]Cl^-$$

in der a für 10 und 12 steht, zugefügt. Nach dem Absaugen des Niederschlags erhielt man 104 g einer Xanthan-Amin-Addukt-Paste mit einem Xanthangehalt von 8,7 %. Hiervon wurde mit Standardsalzlösung eine 0,1 % Xanthan enthaltende Lösung hergestellt, die eine Viskosität $\eta$= 29,4 mPa·s aufwies.

Beispiel 32

Eine gemäß Beispiel 6 erhaltene Addukt-Paste wurde mit jeweils 10 %igen wäßrigen Salzlösungen auf 0,1 % Xanthan-Gehalt verdünnt und die Viskositäten gemessen. Die Ergebnisse zeigt die Tabelle 4:

Tabelle 4:

| Art des Salzes | η (mPa·s) |
|---|---|
| NaCl | 45,2 |
| $MgCl_2$ | 46,4 |
| $CaCl_2$ | 37,9 |
| $NH_4Cl$ | 42,0 |
| $Na_2SO_4$ | 43,6 |
| $MgSO_4$ | 39,1 |
| $Al_2(SO_4)_3$ | 56,6 |
| Na-Acetat | 41,3 |
| Nordseewasser | 45,1 |

PATENTANSPRÜCHE :

1. Verfahren zur Herstellung viskoser wäßriger Lösungen auf Basis von carboxygruppenhaltigen Polysacchariden, dadurch gekennzeichnet, daß man das Polysaccharid aus seinen Rohlösungen durch Fällen mit einer Aminverbindung mit einem hydrophoben Rest abtrennt, den Niederschlag isoliert und durch Verdünnen in einer wäßrigen Lösung eines anorganischen Salzes auf Anwendungskonzentrationen löst.

2. Verfahren nach Anspruch 1, dadurch gekennzeichnet, daß das Polysaccharid ein mikrobielles Exopolysaccharid ist.

3. Verfahren nach Anspruch 1 und 2, dadurch gekennzeichnet, daß das Polysaccharid aus Fermentationsbrühen gefällt wird.

4. Verfahren nach Anspruch 1 bis 3, dadurch gekennzeichnet, daß die wäßrige Lösung des anorganischen Salzes in situ durch Zugabe von Salz zum Niederschlag oder zu einer wäßrigen salzarmen oder salzfreien Lösung erzeugt wird.

5. Wäßrige Lösungen, erhältlich nach Anspruch 1 bis 4.

Patentansprüche Österreich:

1. Verfahren zur Herstellung viskoser wäßriger Lösungen auf Basis von carboxygruppenhaltigen Polysacchariden, dadurch gekennzeichnet, daß man das Polysaccharid aus seinen Rohlösungen durch Fällen mit einer Aminverbindung mit einem hydrophoben Rest abtrennt, den Niederschlag isoliert und durch Verdünnen in einer wäßrigen Lösung eines anorganischen Salzes auf Anwendungskonzentrationen löst.

2. Verfahren nach Anspruch 1, dadurch gekennzeichnet, daß das Polysaccharid ein mikrobielles Exopolysaccharid ist.

3. Verfahren nach Anspruch 1 und 2, dadurch gekennzeichnet, daß das Polysaccharid aus Fermentationsbrühen gefällt wird.

4. Verfahren nach Anspruch 1 bis 3, dadurch gekennzeichnet, daß die wäßrige Lösung des anorganischen Salzes in situ durch Zugabe von Salz zum Niederschlag oder zu einer wäßrigen salzarmen oder salzfreien Lösung erzeugt wird.